# FASCICULE DE BREVET EUROPEEN

(11) **EP 0 543 753 B1**
(45) Date de publication et mention de la délivrance du brevet: **20.05.1998**
(21) Numéro de dépôt: 92420430.8
(22) Date de dépôt: 20.11.1992
(51) Int. Cl.: C08K 3/14, C08K 3/28

(54) **Matériaux composites résistant à l'usure et procédé pour leur fabrication**
Verschleissfestes Verbundmaterial und Verfahren zu seiner Herstellung
Wear-resistant composite material and method for its manufacture

(30) Priorité: 21.11.1991 FR 9114608
(43) Date de publication de la demande: 26.05.1993
(73) Titulaire: GEC ALSTHOM NEYRPIC, 38041 Grenoble (FR)
(72) Inventeur: Roman, Jean-Marie, F-38130 Echirolles (FR); Bienvenu, Gérard, F-74108 Annemasse (FR); Gauger, Jürgen, F-74108 Annemasse (FR)
(74) Mandataire: Karmin, Roger

(56) Documents cités:
- JP-A- 2 210 095
- JP-A- 2 260 546
- JP-A-63 035 887
- US-A- 3 780 080
- CHEMICAL ABSTRACTS, vol. 85, no. 20, 15 Novembre 1976, Columbus, Ohio, US; abstract no. 144923, page 107
- DATABASE WPIL Derwent Publications Ltd., London, GB; AN 90-364765
- DATABASE WPIL Derwent Publications Ltd., London, GB; AN 87-230991
- Taschenbuch der Kunststoff-Additive, page 428

## Description

La présente invention concerne des matériaux composites résistant à l'usure, ainsi qu'un procédé pour leur fabrication .

On recherche dans de nombreux domaines à résoudre les problèmes posés par l'usure, l'érosion, la cavitation et l'abrasion en milieu corrosif ; ces problèmes sont tout spécialement importants pour les pales de turbines hydrauliques.

Les utilisateurs recherchent un matériau réunissant les propriétés suivantes :
- Dureté élevée lui permettant de résister aux phénomènes d'érosion et de frottement
- Bonne ductilité lui permettant de résister aux chocs
- Structure lui assurant un bon comportement vis-à-vis de la corrosion.

A l'heure actuelle, les matériaux dont on dispose, qu'il s'agisse d'aciers à hautes caractéristiques mécaniques, de céramiques... ne possédent pas ces propriétés qui apparaissent d'ailleurs comme contradictoires.

En effet, un matériau présentant les propriétés de dureté nécessaires n'est généralement pas assez ductile. S'il résiste bien à la corrosion, ses propriétés mécaniques ne sont pas suffisantes. Le principal inconvénient des matériaux actuellement disponibles reste bien leur fragilité.

La présente invention s'est donné pour objet de proposer des matériaux composites, facilement applicables sur les matériaux actuellement en usage, et présentant à la fois des caractéristiques de dureté, de ductilité et de structure adaptée.

Au cours de nombreux essais, les inventeurs ont pu déterminer que les meilleurs résultats étaient obtenus lorsque l'on associait une matrice de polymères organiques, de type élastomère, suffisamment élastique pour absorber les chocs de grosses particules en suspension dans un courant de fluide, à un réseau suffisamment dense de particules dures, submicroniques, de forme proche de la sphéricité et de distribution régulière, réparties dans cette matrice de telle sorte que, lorsqu'une particule, par exemple et au plus fin mesuré, de quelques dizaines de microns vient frapper le matériau, elle soit réceptionnée sur un lit dense de particules dures enchassées dans la matrice élastique.

L'introduction de grosses particules dans des matrices organiques est déjà bien connue et est utilisée dans le domaine des revêtements de sol pour renforcer lesdites matrices contre l'usure provoquée par la marche ou la circulation d'engins sur leur surface. Les matériaux de ce type se sont révélés toutefois totalement inadaptés lorqu'ils sont destinés à subir des phénomènes d'érosion du fait de l'action de fluides chargés en particules abrasives ; dans ce cas en effet on a pu constater que, sous l'action de ces fluides, les grosses particules se déchaussaient de la matrice.

La présente invention concerne donc, en premier lieu, des matériaux composites constitués de l'association d'une matrice élastique organique à un réseau de particules céramiques non oxydes quasi sphériques, de dimensions submicroniques pour la majeure partie et ayant en général un diamètre compris entre 0,1 µm et 10 µm, réparties uniformément dans ladite matrice.

La matrice élastique organique est choisie parmi les composés de polyuréthane.

Alternativement, la matrice élastique organique est choisie parmi les élastomères synthétiques résistant aux températures supérieures à 100°C tels que caoutchouc butadiène et butyle.

Les particules submicroniques de poudres céramiques non oxydes sont choisies parmi les poudres de carbures, nitrures et carbonitrures de métaux réfractaires comme le titane, le zirconium, le hafnium, le tantale, le niobium, le tungstène, le molybdène, le bore et le silicium ou un mélange de composés de ces métaux.

Selon un mode de réalisation préférentiel, les particules submicroniques sont choisies parmi les poudres céramiques non oxydes formées entre un métalloïde et un métal réfractaire, telles que celles obtenues par mise en oeuvre du procédé décrit dans FR - A - 87 0097 du 8 Janvier 1987. L'un des principaux avantages de ce procédé est qu'il permet d'obtenir en surface la composition stoechiométrique à 0,4 % près et que la surface est pauvre en oxygène.

La densité des particules submicroniques est supérieure à celle des particules susceptibles de venir dégrader le matériau revêtu.

Elle peut se situer entre environ 16 et environ 5, comme dans le cas par exemple des particules de WC (d=15,72); TaC (14,48); NbC (7,78) ; TaN (14,3).

Pour des raisons économiques et d'optimisation de l'absorption des chocs on choisit de préférence des particules submicroniques dont la densité se situe aux environs de 5.

Une caractéristique importante des matériaux composites selon l'invention est qu'il n'existe pas de couplage électro-chimique entre la matrice et les particules submicroniques, couplage qui serait susceptible d'intervenir dans d'éventuels processus de corrosion.

Les matériaux composites selon l'invention peuvent être appliqués sur des substrats de toute nature, tels que alliages métalliques, composés organiques, béton, bois, verre et tous les autres matériaux composites.

L'invention concerne également un procédé d'obtention de ces matériaux composites, qui permet d'assurer tant une parfaite répartition des particules dures submicroniques à l'intérieur de la matrice que l'absence de tout couplage électro-chimique entre la matrice et les particules, évitant ainsi toute intervention dans d'éventuels processus de corrosion.

Selon ce procédé, la distribution uniforme, homogène et sans agglomérats des particules submicroniques céramiques non oxydes dans la matrice est assurée par le fait que lesdites particules submicroniques sont, immédiatement avant leur introduction dans la matrice, plongées dans un dispersant organique macromoléculaire choisi de telle sorte que les chaînes macromoléculaires du dispersant se fixent sur la surface des particules par liaisons non covalentes.

On réduit ainsi la tension interfaciale entre la matrice organique et les particules submicroniques ; d'autre part, les mêmes chaînes macromoléculaires assurent le maintien de la distance séparant les particules submicroniques.

Les particules submicroniques sont alors insérées dans le dispersant et il se produit un effet stérique en raison du fait que les sites du dispersant pouvant accueillir les particules sont peu nombreux ; les particules seront ainsi englobées à des distances importantes, à l'échelle moléculaire, les unes des autres.

Le dispersant est choisi de préférence parmi les composés polycarboxyliques ou polysilanes ou une combinaison de ces deux composés.

Selon un mode de réalisation préféré de l'invention, le dispersant est constitué de la combinaison d'un acide polycarboxylique et d'un copolymère de polysiloxane.

La nature organique de la matrice et du dispersant assure l'accord du système de polarité de ces deux composants, et leur permet la formation de liaisons non covalentes.

Le pourcentage de la charge en particules céramiques submicroniques se situe avantageusement entre 1 et 80 % en poids par rapport à la charge finale.

Un procédé de fabrication des matériaux composites selon l'invention comporte essentiellement les étapes suivantes :
- Préparation de la surface de poudres céramiques non oxydes submicroniques par insertion, sous agitation inférieure ou égale à 16000 tours/minute, pendant environ 10 à 30 minutes et à une température inférieure à 100°C, dans un dispersant organique macromoléculaire.
- Introduction, sous agitation inférieure ou égale à 16000 tours/minute et à une température inférieure à 100°C des poudres céramiques ainsi préparées dans un des éléments constitutifs de la matrice organique
- Introduction du mélange obtenu dans l'autre constituant de la matrice et application immédiate de l'ensemble sur la pièce préparée pour recevoir le matériau.

Alternativement, un autre procédé de fabrication des matériaux composites selon l'invention comporte essentiellement les étapes suivantes :
- Préparation de la surface de poudres céramiques non oxydes submicroniques par insertion, sous agitation inférieure ou égale à 16000 tours/minute, pendant 10 à 30 minutes et à une température inférieure à 100°C dans un dispersant organique macromoléculaire .
- Introduction, sous agitation inférieure ou égale à 16000 tours/minute et à une température inférieure à 100°C des poudres céramiques ainsi préparées dans la matrice organique et application immédiate de l'ensemble sur la pièce préparée pour recevoir le matériau.

La rapidité de ces opérations, ou à défaut une agitation à chaud, permet de s'affranchir des éventuels phénomènes de décantation des particules dans la matrice organique.

Elle permet d'obtenir, de façon très simple, des matériaux massifs ou en couches lamellaires présentant une bonne tenue à l'érosion.

C'est ainsi qu'une matrice élastique de densité égale à 1,1 g/cm3, chargée à 30 % en poids de particules sphéroïdales de diamètre moyen de 0,7 µm avec une densité de 5,4 g/cm3 présente une densité superficielle de 5,85.10⁷ particules par cm2. Le choc d'une particule solide de 50 µm de diamètre sur une telle surface est absorbé sur une surface d'environ 2.10⁻⁶ cm2 contenant 1150 micro-particules réceptrices.

On voit bien que la taille des particules insérées dans la matrice élastique est adaptée tant pour avoir un nombre suffisant de particules soumises à l'impact, que pour avoir des surfaces spécifiques de liaison particules/matrice importantes, une bonne adhésion, une densité importante, et une dureté élevée (sup. à 2000 HV (500g). D'autre part, la forme quasi sphérique des particules submicroniques est celle qui résiste le mieux à l'impact des grosses particules venant frapper le matériau composite.

Les épaisseurs des matériaux obtenus par mise en oeuvre du procédé peuvent être très importantes (inférieures ou égales à plusieurs dizaines de centimètres) ce qui permet, lors de l'impact des particules incidentes, de répartir et d'amortir l'onde de choc dans la masse ; dans le cas de revêtements lamellaires, il sera ainsi possible de s'affranchir des problèmes de liaison substrat/produit.

Les exemples suivants de fabrication des matériaux composites anti-abrasion et de leur application sur cylindres d'acier permettront de mieux comprendre la présente invention, les caractéristiques qu'elle présente et les avantages qu'elle est susceptible de procurer .

Dans ces exemples, la matrice est une matrice polyuréthane mais il est bien évident que l'homme du métier pourra facilement remplacer cette matrice par d'autres matrices élastomères, dans le cas notamment où il serait nécessaire de disposer de matrices présentant une meilleure tenue aux températures élevées.

### EXEMPLE I

On prépare une poudre de carbure de titane en utilisant comme réducteur du carbure de calcium préparé in situ dans un bain de sel fondu essentiellement constitué de chlorure de calcium, dans les conditions décrites dans l'exemple I de FR - A - 87 00097.

On obtient une poudre présentant un paramètre de maille de a = 4,3279 angströms, avec une variation de 0,257 % et une granulométrie moyenne de 0,5 µm.

69,6 g. de prépolymère d'isocyanate (tel que celui commercialisé sous le nom de DESMODUR VP-LS 2954 par Bayer), 20,0 g de cette poudre et 2,0 g d'un dispersant organique à base d'acide polycarboxylique-polysiloxane, tel que celui commercialisé sous le nom de BYK P 104 S par BYK-Chemie (Allemagne) sont mélangés avec une vitesse d'agitation inférieure ou égale à 1000 tours/minute, et ensuite à une vitesse inférieure ou égale à 16000 tours/minute, à une température de l'ordre de 80°C, pendant 20 minutes.

Le mélange obtenu est additionné de 8,4 g d'un durcisseur constitué d'une solution à 67 % dans du carbonate de propylène de diamine aromatique substitué.

On a préparé d'autre part des cylindres acier/chrome de diamètre 20 mm et de hauteur 47 mm par dégraissage à l'acétone, séchage et traitement sur une des deux sufaces coupées avec un papier abrasif grain 100. Les surfaces traitées sont nettoyées à l'acétone et le cylindre séché à 40°C. On applique au pinceau, sur la surface traitée du cylindre, une couchede l'ordre de 2 à 5 mm d'un revêtement primaire de résine époxy que l'on sèche :
soit pendant 2 heures à 40°C : Cylindre A
soit pendant 24 heures à 20°C ; Cylindre B

C'est sur ces cylindres ainsi préparés que l'on applique immédiatement le matériau préparé dans les conditions de l'exemple I.

### EXEMPLE II

On part de la poudre de carbure de titane préparée dans les conditions de l'exemple I.

59,8 g de prépolymère d'isocyanate (tel que celui commercialisé sous le nom de DESMODUR VP-LS 2954 par Bayer), 30,0 g de cette poudre et 3,0 g d'un dispersant organique à base d'acide polycarboxylique-polysiloxane, tel que celui commercialisé sous le nom de BYK P 104 S par BYK-Chemie (Allemagne) sont mélangés avec une vitesse d'agitation inférieure ou égale à 1000 tours/minute, et ensuite à une vitesse inférieure ou égale à 16000 tours/minute, à une température de l'ordre de 80°C, pendant 20 minutes.

Le mélange obtenu, additionnné de 7,2 g d'un durcisseur constitué d'une solution à 67 % dans du carbonate de propylène de diamine aromatique substitué, est appliqué immédiatement sur les cylindres d'acier préparés comme mentionné ci-avant. (A et B)

### EXEMPLE III

On part de la poudre de carbure de titane préparée dans les conditions de l'exemple I.

50,0 g de prépolymère d'isocyanate (tel que celui commercialisé sous le nom de DESMODUR VP-LS 2954 par Bayer), 40,0 g de cette poudre et 4,0 g d'un dispersant organique à base d'acide polycarboxylique-polysiloxane, tel que celui commercialisé sous le nom de BYK P 104 S par BYK-Chemie (Allemagne) sont mélangés avec une vitesse d'agitation inférieure ou égale à 1000 tours/minute, et ensuite à une vitesse inférieure ou égale à 16000 tours/minute, à une température de l'ordre de 80°C, pendant 20 minutes.

Le mélange obtenu, additionnné de 6 g d'un durcisseur constitué d'une solution à 67 % dans du carbonate de propylène de diamine aromatique substitué est appliqué immédiatement sur les cylindres d'acier préparés comme mentionné ci-avant. (A et B).

Par ailleurs, on a appliqué à un cylindre témoin une couche de revêtement primaire époxy que l'on a séchée pendant 2 heures à 40°C et que l'on a ensuite revêtue d'un mélange constitué de 89,3 g du prépolymère d'isocyanate et de durcisseur utilisés dans les exemples précédents.

Les résultats obtenus sont les suivants :

### USURE EN MM DE DIFFERENTS MATERIAUX DANS DES CONDITIONS D'EXPERIENCES IDENTIQUES EN EROSION ABRASIVE

- Pu seul 0,50
- Pu + céramique 0,20
- Rechargement acier inox austénitique 304 ou 316 0,9
- Rechargement acier inox martensitique Z 05 CN 16-04 0,85
- Acier à abrasion type CREUSABRO (Creusot-Loire) 0,7
- Acier de construction 1,2

Des résultats similaires ont été obtenus en remplaçant le carbure de titane par le nitrure de titane et par le carbure de silicium.

## Revendications

1. Matériaux composites destinés à recouvrir des pièces soumises à des phénomènes d'usure, d'érosion, de cavitation et d'abrasion notamment en milieu corrosif, caractérisés en ce qu'ils sont constitués de l'association d'une matrice élastique organique à un réseau de particules céramiques non oxydes quasi sphériques, de dimensions submicroniques pour la majeure partie et ayant un diamètre compris entre 0,1 µm et 10 µm, réparties uniformément dans ladite matrice, la densité des particules submicroniques se situant entre 16 et 4,93

2. Matériaux composites selon la revendication 1, caractérisés en ce que la matrice élastique organique est choisie parmi les polyuréthanes.

3. Matériaux composites selon la revendication 1, caractérisés en ce que la matrice élastique organique est choisie parmi les composés organiques élastomères résistant aux températures supérieures à 100°C.

4. Matériaux composites selon l'une quelconque des revendications 1 à 3, caractérisés en ce que les particules submicroniques sont des poudres de carbures, nitrures ou carbonitrures de métaux réfractaires choisis parmi le titane, le zirconium, le hafnium, le tantale, le niobium, le tungstène le molybdène, le bore, de nitrures ou carbonitrures de silicium ou un mélange de ces composés de métaux.

5. Matériaux composites, selon l'une quelconque des revendications 1 à 4, caractérisés en ce que la densité des particules submicroniques se situe aux environs de 5.

6. Procédé de fabrication de matériaux composites selon l'une quelconque des revendications 1 à 5, caractérisé en ce que lesdites particules submicroniques sont, immédiatement avant leur introduction dans la matrice organique, plongées dans un dispersant organique macromoléculaire choisi de telle sorte que les chaînes macromoléculaires du dispersant se fixent sur la surface des particules par liaisons non covalentes.

7. Procédé de fabrication selon la revendication 6, caractérisé en ce que le dispersant est choisi parmi les composés polycarboxyliques ou polysilanes et les combinaisons de ces deux composés.

8. Procédé de fabrication selon la revendication 7, caractérisé en ce que le dispersant est une combinaison d'un acide polycarboxylique et d'un copolymère de polysiloxane.

9. Procédé de fabrication selon l'une quelconque des revendications 6 à 8, caractérisé en ce que le pourcentage de la charge en particules céramiques submicroniques se situe entre 1 et 80 % en poids par rapport à la charge finale.

10. Procédé de fabrication selon l'une quelconque des revendications 6 à 9, caractérisé en ce qu'il comporte essentiellement les étapes suivantes :
- Préparation de la surface de poudres céramiques non oxydes submicroniques par insertion desdites poudres, sous agitation inférieure ou égale à 16000 tours/minute, pendant environ 10 à 30 minutes et à une température inférieure à 100°C, dans un dispersant organique macromoléculaire.
- Introduction, sous agitation inférieure ou égale à 16000 tours/minute et à une température inférieure à 100°C des poudres céramiques ainsi préparées dans un des éléments constitutifs de la matrice organique
- Introduction du mélange obtenu dans l'autre constituant de la matrice et application immédiate de l'ensemble sur la pièce préparée pour recevoir le revêtement.

11. Procédé de fabrication selon l'une quelconque des revendications 6 à 9, caractérisé en ce qu'il comporte essentiellement les étapes suivantes :
- Préparation de la surface de poudres céramiques non oxydes submicroniques par insertion desdites poudres, sous agitation inférieure ou égale à 16000 tours/minute, pendant environ 10 à 30 minutes et à une température inférieure à 100°C dans un dispersant organique macromoléculaire .
- Introduction, sous agitation inférieure ou égale à 16000 tours/minute et à une température inférieure à 100°C des poudres céramiques ainsi préparées dans la matrice organique et application immédiate de l'ensemble sur la pièce préparée pour recevoir le revêtement.

## Patentansprüche

1. Verbundmaterialien zum Beschichten von Teilen, die Verschleiß-, Erosions-, Cavitations- und Abrasionsphänomenen inbesondere in einem korrosiven Milieu ausgesetzt werden,
dadurch **gekennzeichnet,**
daß sie aufgebaut sind aus einer Assoziation einer organischen elastischen Matrix mit einem Netz aus quasi sphärischen, keramischen, Nichtoxid-Partikeln mit submikronischen Abmessungen für den Hauptteil und einem Durchmesser von 0,1 µm bis 10 µm, die gleichmäßig in dieser Matrix verteilt sind, wobei die Dichte der submikronischen Partikel 16 bis 4,93 beträgt.

2. Verbundmaterialien nach Anspruch 1,
dadurch **gekennzeichnet,**
daß die organisch elastische Matrix ausgewählt ist aus Polyurethanen.

3. Verbundmaterialien nach Anspruch 1,
dadurch **gekennzeichnet,**
daß die organische elastische Matrix ausgewählt ist aus den elastomeren organischen Verbindungen, die bei Temperaturen oberhalb von 100° C beständig sind.

4. Verbundmaterialien nach einem der Ansprüche 1 bis 3,
dadurch **gekennzeichnet**,
daß die submikronischen Partikel Carbid-, Nitrid- oder Carbonitridpulver von hochschmelzenden Metallen sind, die ausgewählt sind aus Titan, Zirkonium, Hafnium, Tantal, Niob, Wolfram, Molybden und Bor, Siliciumnitriden oder -carbonitriden oder einer Mischung dieser Metallverbindungen.

5. Verbundmaterialien nach einem der vorhergehenden Ansprüche 1 bis 4,
dadurch **gekennzeichnet,**
daß die Dichte der submikronischen Partikel bei ungefähr 5 liegt.

6. Herstellungsverfahren für Verbundmaterialien nach einem der Ansprüche 1 bis 5,
dadurch **gekennzeichnet,**
daß die submikronischen Partikel unmittelbar vor ihrem Eintrag in die organische Matrix in ein makromolekulares organisches Dispergiermittel getaucht werden, das derart ausgewählt ist, daß sich die makromolekularen Ketten des Dispergiermittels auf der Oberfläche der Partikel durch nichtkovalente Bindungen fixieren.

7. Herstellungsverfahren nach Anspruch 6,
dadurch **gekennzeichnet,**
daß das Dispergiermittel ausgewählt ist aus Polycarbonsäure- und Polysilanverbindungen und in Kombinationen dieser beiden Verbindungen.

8. Herstellungsverfahren nach Anspruch 7,
dadurch **gekennzeichnet,**
daß das Dispergiermittel eine Kombination aus einer Polycarbonsäure und einem Polysiloxancopolymer ist.

9. Herstellungsverfahren nach einem der Ansprüche 6 bis 8,
dadurch **gekennzeichnet,**
daß der Prozentsatz der Beladung mit submikronischen keramischen Partikeln 1 bis 80 Gew.-% beträgt, bezogen auf die endgültige Beladung.

10. Herstellungsverfahren nach einem der Ansprüche 6 bis 9,
dadurch **gekennzeichnet,**
daß es im wesentlichen die folgenden Stufen aufweist:
- Herstellung der Oberfläche von keramischen, submikronischen Nichtoxid-Pulvern durch Eintrag dieser Pulver unter Rühren mit 16.000 Umdrehungen/min oder weniger während einer Zeitspanne von 10 bis 30 min und einer Temperatur von weniger als 100° C in ein makromolekulares organisches Dispergiermittel,
- Einführen unter Rühren mit 16.000 Umdrehungen/min oder weniger sowie einer Temperatur von weniger als 100° C von so hergestellten keramischen Pulvern in eines der die organische Matrix bildenden Elemente und
- Einführen der erhaltenen Mischung in den anderen Bestandteil der Matrix und unmittelbares Auftragen des Ganzen auf das für die Aufnahme der Beschichtung präparierte Teil.

11. Herstellungsverfahren nach einem der Ansprüche 6 bis 9,
dadurch **gekennzeichnet,**
daß es im wesentlichen die folgenden Stufen aufweist:
- Herstellung der Oberfläche von submikronischen keramischen Nichtoxid-Pulvern durch Eintrag dieser Pulver unter Rühren mit 16.000 Umdrehungen/min oder weniger während eines Zeitraumes von etwa 10 bis 30 min sowie bei einer Temperatur von weniger als 100° C in ein makromolekulares organisches Dispergiermittel,
- Einführen unter Rühren mit 16.000 Umdrehungen/min oder weniger sowie bei einer Temperatur von weniger als 100° C von so hergestellten keramischen Pulvern in die organische Matrix und unmittelbares Aufbringen des Ganzen auf das zur Aufnahme der Beschichtung präparierte Teil.

## Claims

1. Composite materials for use in coating parts subject to wear, erosion, cavitation and abrasion, especially in a corrosive medium, characterised in that they comprise the combination of an organic elastic matrix with a set of quasi-spherical non-oxide ceramic particles mainly of submicron dimensions and of diameter between 0.1 µm and 10 µm, uniformly distributed in the said matrix, the density of the submicron particles being between 16 and 4.93.

2. Composite materials according to claim 1, characterised in that the elastic organic matrix is selected from the polyurethanes.

3. Composite materials according to claim 1, characterised in that the organic elastic matrix is selected from elastomeric organic compounds withstanding temperatures above 100°C.

4. Composite materials according to any one of claims 1 to 3, characterised in that the submicron particles are powders of carbides, nitrides or carbonitrides of refractory metals selected from titanium, zirconium, hafnium, tantalum, niobium, tungsten, molybdenum, boron, silicon nitrides or carbonitrides or a mixture of these metal compounds.

5. Composite materials according to any one of claims 1 to 4, characterised in that the density of the submicron particles is around 5.

6. Process for the manufacture of composite materials according to any one of claims 1 to 5, characterised in that immediately before being added to the organic matrix the said submicron particles are immersed in a macromolecular organic dispersing agent selected so that the macromolecular chains of the dispersing agent become attached to the surfaces of the particles through non-covalent bonds.

7. Process of manufacture according to claim 6, characterised in that the dispersing agent is selected from polycarboxylic or polysilane compounds and combinations of these two compounds.

8. Process of manufacture according to claim 7, characterised in that the dispersing agent is a combination of a polycarboxylic acid and a polysiloxane copolymer.

9. Process of manufacture according to any one of claims 6 to 8, characterised in that the percentage loading of submicron ceramic particles lies between 1 and 80% by weight with respect to the final loading.

10. Process of manufacture according to any one of claims 6 to 9, characterised in that it comprises essentially the following stages:
- Surface preparation of submicron non-oxide ceramic powders by placing the said powders in a macromolecular organic dispersant stirred at not more than 16000 revolutions/minute for some 10 to 30 minutes at a temperature below 100°C.
- Adding the ceramic powders so obtained to one of the components constituting the organic matrix stirred at not more than 16000 revolutions/minute at a temperature below 100°C.
- Adding the mixture obtained to the other component of the matrix and immediate application of the whole to the part prepared to receive the coating.

11. Process of manufacture according to any one of claims 6 to 9, characterised in that it essentially comprises the following stages:
- Surface preparation of submicron non-oxide ceramic powders by placing the said powders in a macromolecular organic dispersant stirred at not more than 16000 revolutions/minute for some 10 to 30 minutes at a temperature below 100°C.
- Adding the ceramic powders so obtained to the organic matrix stirred at not more than 16000 revolutions/minute at a temperature of less than 100°C and immediate application of the whole to the part prepared to receive the coating.
